# EUROPEAN PATENT APPLICATION

(11) **EP 4 116 240 A1**
(43) Date of publication of application: **11.01.2023**
(21) Application number: 22175673.7
(22) Date of filing: 26.05.2022
(51) Int. Cl.: B65G 47/26

(54) **METHOD FOR PRODUCING FOOD PRODUCTS AND METHOD FOR TRANSFERRING PRODUCTS**

(30) Priority: 27.05.2021 IT 202100013901
(71) Applicant: Bouvard Italia S.p.A., 33034 Fagagna (UD) (IT)
(72) Inventor: Notte, Patrick André, 01000 Bourg en Bresse (FR)
(74) Representative: Petraz, Gilberto Luigi

(57) **Abstract**

Method for producing food products (11), comprising:
- a step of preparing food products (11) carried out in a preparation section (S1);
- a step of thermal conditioning of the food products (11) carried out in a thermal conditioning unit (57),
wherein in said preparation step a first group (G1) of said food products (11), which are disposed divided into a plurality of (M1) consecutive ranks (13, 13A-13F), is made to advance in a direction of advance (X) which occupies, in said preparation section (S1), a first length (LG1) in a direction of advance (X), and between said preparation step and said thermal conditioning step said food products (11) of said first group (G1) are reorganized defining a second group (G2) of food products (11).

The invention also concerns a method for transferring products (11).

## Description

### FIELD OF THE INVENTION

The present invention concerns a method for producing food products. The invention also concerns a transfer method for a product processing line, which allows to increase the number of products in a rank or in a row.

### BACKGROUND OF THE INVENTION

In lines for producing products, for example bakery products, there are normally several operating units located sequentially in a direction of advance.

In a production line for bakery products based on sponge cake or suchlike, the operating units generally comprise an oven for cooking the sponge cake, one or more operating units for cutting, filling, or covering the products, possible external filling, cooling and packaging.

The products, disposed according to a matrix pattern, aligned by rows and by columns, are transported in a direction of advance by means of one or more conveyor belts.

It is known that the different operating steps can require different speeds of advance of the products.

For example, the products must remain in the cooling unit long enough to obtain an exit temperature suitable for packaging; for this purpose it is necessary to decrease the speed of advance of the products with respect to the upstream operating units, or to lengthen the cooling unit in order to ensure the product remains in it long enough.

Both options, however, have disadvantages.

The first option entails a considerable reduction in the overall productivity of the production line, while the second option requires a lengthening of the plant and therefore an increase in costs and space needed without solving - given the same times - the problem of productivity. Furthermore, this last modification is much more difficult if not impossible to apply in plants that are already installed.

Document WO2012105374A1 describes a method and an apparatus for modifying the mode of transport of absorbent articles from a longitudinal transfer mode to a transverse transfer mode. The articles are initially made to advance disposed aligned on an even number of parallel rows, staggered longitudinally between adjacent rows, in which the products inside the individual rows are distanced in a longitudinal direction to define respective groups of articles disposed inclined with respect to a direction of advance, which are subsequently aligned to obtain a single row, in which the articles are disposed parallel to each other, with their longitudinal axes aligned in a direction orthogonal to a direction of advance.

Document US3427910A describes an apparatus for separating food products, which are disposed according to a honeycomb disposition, in which the apparatus comprises a conveyor provided with a plurality of flexible belts suitable to transport the products from one side of the apparatus to the other, in which said belts have first ends adjacent to each other and second ends respectively diverging, so as to separate the products from each other as they are made to advance.

These solutions are bulky and require considerable space to be installed, and moreover they are not suitable for maintaining high productivity in possible operating stations disposed downstream.

There is therefore a need to perfect an apparatus and a method and for transferring products which allow to overcome at least one of the disadvantages of the state of the art.

To do this, it is necessary to solve the technical problem of reducing the speed of advance of the products between an operating unit upstream to an operating unit downstream without interruptions in the production line and keeping the overall productivity constant.

One purpose of the present invention is to perfect a method for producing food products and to provide a production line which are highly productive and allow to produce the food products efficiently without requiring any lengthening of the processing times or oversizing of the production units compared with those known in the state of the art.

Another purpose of the present invention is also to provide a transfer method and apparatus which allow to automatically modify the speed of advance of the products along the production line, ensuring that the products remain in each operating unit for long enough to complete the operations envisaged on them.

Another purpose of the present invention is to perfect a method and to provide an apparatus for transferring the products from one operating station to another which allow to optimize the available spaces in relation to the speed of advance, keeping the products aligned according to a predefined pattern.

Another purpose of the present invention is to provide a transfer method and apparatus which allow to align the products in ordered ranks without needing to use further guides which could become obstructed, or mechanical arms which could damage the products.

Another purpose of the present invention is also to provide a transfer apparatus which is very compact and can be used both in new production lines and also inserted in already existing production lines.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes and in order to resolve the technical problem in a new and original way, also achieving considerable advantages with respect to the prior art,

In accordance with another aspect of the present invention, a method for producing food products comprises:
- a step of preparing food products carried out in a preparation section;
- a step of thermal conditioning of the food products carried out in a thermal conditioning unit.

In accordance with one aspect of the present invention, in the preparation step a first group of the food products, which are disposed divided into a plurality of consecutive ranks, is made to advance in a direction of advance which occupies, in the preparation section, a first length in a direction of advance.

In accordance with another aspect of the present invention, between the preparation step and the thermal conditioning step the food products of the first group are reorganized by combining at least one of the ranks with at least part of another of the ranks, defining a second group of food products that advances toward the thermal conditioning unit and has the same number of products of the first group but a number of combined ranks of products smaller than the number of ranks of the first group, so that, in the thermal conditioning unit, the second group occupies a second length, in the direction of advance, shorter than the first length.

In accordance with another aspect of the invention, at least one of the combined ranks is a multiple rank comprising a number of products equal to an integer multiple of the number of products of a single rank.

In accordance with another aspect of the invention, at least one of the combined ranks comprises a number of products comprised between a number of products of a single rank plus one and an integer multiple of the number of products of a single rank minus one.

In accordance with another aspect of the present invention, in a combined rank the products of a first rank are alternated with the products of a second rank.

In accordance with another aspect of the present invention, in a combined rank the products of a first rank are all disposed on a same side, and they are placed side by side with the products of a second rank.

In accordance with another aspect of the present invention, in the thermal conditioning step the products are made to advance at a lower speed of advance than that with which they advance in the preparation step, and in particular equal to approximately half the speed of advance in the preparation step. This allows to obtain the desired effect of thermal conditioning of food products, without needing to increase the sizes of the thermal conditioning unit compared to those of traditional solutions, and at the same time to obtain a high productivity of the production method and of the production line that implement such method.

In accordance with another aspect of the invention, in the thermal treatment step the products are subjected to cooling in order to reduce their temperature.

In accordance with another aspect of the present invention, the step of preparing the products comprises:
- a step of preparing a base product;
- a step of cutting the base product so as to obtain portions that are adjacent to each other;
- a step of distancing the portions in a direction that is orthogonal to a direction of advance so as to obtain a plurality of products ordered by ranks, wherein the products of each rank are distanced from each other by a first pitch.

In accordance with another aspect of the production method according to the invention, the portions are flat and the distancing step comprises a rolling of the portions around respective longitudinal axes that are parallel to the direction of advance.

In accordance with another aspect of the invention, the production method comprises a step of filling the products which provides to apply a layer of filling on the portions.

In accordance with another aspect of the invention, the production method comprises a step of cutting in a longitudinal direction, parallel to the direction of advance, and a step of cutting in a direction that is orthogonal to the direction of advance.

In accordance with another aspect of the invention, between the distancing step and the thermal treatment step, the production method according to the invention comprises a step of external filling of the products.

In accordance with another aspect of the present invention, in the thermal conditioning step the products ordered in combined ranks are subjected to a cooling in order to decrease their temperature.

In accordance with another aspect of the present invention, a method for transferring products provides to:
- make the products ordered by ranks and distanced from each other by a first step advance in a direction of advance;
- receive at least a first and at least a second rank of products at entry into a multiplier device and combine them together to obtain a single "multiple" rank, that is, a single rank comprising a number of products equal to the sum of the products of at least a first and of at least part of a second rank, distanced from each other by a second pitch, wherein in the "multiple" rank the products of the first rank are alternated with the products of the second rank;
- make the multiple rank advance in the direction of advance.

In accordance with another aspect of the present invention, the transfer method provides to receive the first rank of products on a first conveyor belt and subsequently translate the conveyor belt in a direction that is transverse, in particular orthogonal, with respect to the direction of advance before receiving a second rank of products, so that the products of the second rank intersect in the free spaces between the products of the first rank.

The combination of the products of the first and second rank occurs by exploiting the distancing provided between the products of the first rank in which the products of the second rank, by alternating each other, are positioned.

The resulting distance between the products of the multiple rank, known as second pitch, is a distance that is substantially equal between all the products, and which is smaller than the distance of the products of the first rank.

In accordance with another aspect of the present invention, before receiving a rank, the transfer method provides to slow down and/or keep stationary the first conveyor belt in the direction of advance with respect to the first advance means, in order to align the heads of the products and compact the rank at entry.

In accordance with another aspect of the present invention, the transfer method provides to transfer the multiple rank onto a second conveyor belt and subsequently translate the second conveyor belt in a direction that is transverse, in particular orthogonal, to the direction of advance in order to align and center it with respect to a reference axis.

In accordance with another aspect, the transfer method according to the invention provides to slow down and/or keep stationary the second conveyor belt in the direction of advance in order to automatically and efficiently align the heads of the products, in such a way as to compact the multiple rank before supplying it to second advance means disposed downstream.

In accordance with another aspect, the transfer method according to the invention, during the advance of the products toward the multiplier device, provides to distance the ranks from each other by a desired reciprocal distance in the direction of advance by means of a conveyor belt disposed downstream of the first advance means and configured to advance at a speed greater than a speed of the first advance means.

In accordance with another aspect of the present invention, the transfer method provides to detect the position and/or length of the ranks on the first advance means by means of detection devices and command the operation of the first and/or the second conveyor belt, both in terms of speed in the direction of advance and also in terms of position and speed in the orthogonal direction, also as a function of the data received from the detection devices.

In accordance with another aspect of the present invention, the transfer method provides to detect the beginning and the end of each rank, process the data received in order to determine if the overall length of a given rank is comprised in an interval defined by respective minimum and maximum threshold values, and signal the presence of an unsuitable rank or activate removal means that are suitable to eliminate the rank deemed unsuitable.

In accordance with one aspect of the present invention, an apparatus for transferring products comprises first advance means configured to make the products advance in a direction of advance, the products being ordered by ranks wherein each rank comprises a determinate number of products which are distanced from each other by a first pitch.

According to one aspect of the present invention, the transfer apparatus comprises a multiplier device configured to receive at entry, from the first advance means, at least a first and at least a second rank of products and combine them together in order to obtain a single rank, also known as a multiple rank, comprising the number of products deriving from the sum of the products of the first and second rank.

According to another aspect of the present invention, the transfer apparatus comprises second advance means configured to receive the multiplied ranks at exit from the multiplier device and make them advance in parallel to each other in the direction of advance.

Preferably, the overall lateral dimension of a multiple rank is slightly larger than the overall dimensions of a rank at entry, and in particular it is given by the overall width of a rank at entry plus the width of a single product and of a second pitch.

The increase in the overall width falls within the tolerances normally provided in the production lines; therefore, thanks to the transfer apparatus according to the invention, it is also possible to modify already existing production lines quickly and economically, without needing to modify the operating units disposed downstream.

The transfer apparatus according to the invention can be advantageously used in a production line for producing products in which, following one or more production processes, the products are distanced from each other by a pitch larger than their own width in a direction transverse to the direction of advance.

A particular application of the transfer apparatus according to the present invention can be along a line for producing bakery products in the form of rolls, downstream of an operating unit which carries out the rolling process, after which the rolls in the same rank are disposed distanced from each other by a distance sufficient to accommodate another roll coming from another rank.

In accordance with one aspect of the present invention, the multiplier device comprises a first conveyor belt wound on respective rollers, at least one of which is motorized, which is configured to make the products advance in the direction of advance.

According to another aspect of the present invention, the first conveyor belt is mobile in a direction that is transverse, in particular orthogonal, to the direction of advance in one or the other sense with respect to a reference axis of the first advance means which is parallel to the direction of advance.

This allows to receive a first rank of products and subsequently translate it in a transverse direction, in particular orthogonal, so that the products of the second rank are inserted into the free spaces between the products of the first rank.

The first conveyor belt is also configured to align the heads of the products of a rank at entry; the alignment of the products in the rank can be achieved by providing a difference in speed with respect to the first advance means.

Preferably, the first pitch is greater than the maximum width of the individual products, in a direction that is transverse, in particular orthogonal, to the direction of advance, by a percentage greater than or equal to 5%.

Preferably, the ranks fed by the first advance means are centered with respect to a common axis of alignment, and the products are disposed according to a matrix pattern, aligned according to rows and columns so that each rank at exit from the multiplier device comprises a second number of products which is a multiple of the first number.

In general, in the event that the products supplied by the first advance means are distanced by a first pitch greater than a multiple of their width in the transverse direction, the multiplier device could receive at entry a number of ranks corresponding to this multiple and combine them together, obtaining a single rank that has a number of products given by the number of products per rank multiplied by this multiple.

Thanks to the multiplier device, the transfer method and apparatus according to the invention therefore allow to obtain the following advantages:
- align the ranks of products at entry without using barriers;
- double the number of products in a rank in a continuous manner and in a small space, without needing to use guides or conveyor means that could become obstructed;
- supply products at exit with a smaller pitch between each other than the pitch at entry;
- reduce the speed of advance of the products by half in order to increase the capacity of the operating units downstream, without loss of productivity.

According to another aspect of the present invention, the multiplier device comprises a second conveyor belt, disposed between the first conveyor belt and the second advance means, which is wound on respective cylinders, at least one of which is motorized, which slides in the direction of advance and is also mobile in a direction that is transverse to the direction of advance.

The presence of the second conveyor belt, mobile in a transverse direction, allows to displace the multiple rank supplied by the first conveyor belt in such a way as to align it in the direction of advance, positioning it substantially in axis with the first advance means.

Furthermore, the second conveyor belt acts as an alignment element to automatically and efficiently align the heads of the products, in such a way as to compact the multiple rank before it is supplied to the second advance means downstream.

According to another aspect of the invention, the first and/or second advance means also comprise respective entry and exit conveyor belts, configured to advance with respective speeds.

According to one aspect of the present invention, the first advance means can have a constant entry speed, substantially corresponding to the speed of the operating unit disposed upstream, while the second advance means can have a lower exit speed, for example equal to half the entry speed.

In accordance with another aspect of the present invention, the transfer apparatus comprises a control and command unit configured to command the operation of the first and/or second conveyor belt, both in terms of speed in the direction of advance and also in terms of position and speed in the transverse direction.

According to some embodiments, the control and command unit can regulate the operation of the conveyor belt(s) also as a function of data received from detection devices on the position and/or length of the ranks.

In accordance with another aspect, the detection devices comprise photocells suitable to detect the beginning and the end of each rank, and the control and command unit is configured to process the data received in order to determine whether the overall length of a given rank is comprised in an interval defined by respective minimum and maximum threshold values, and signal the presence of an unsuitable rank or activate removal means in order to eliminate such unsuitable rank.

In accordance with another aspect of the invention, a production line for producing products, in particular bakery products, comprises at least two operating units selected from an oven, one or more operating units for longitudinal cutting, filling, rolling, transverse cutting, external filling, thermal conditioning and packaging, which are disposed in a direction of advance, and at least one transfer apparatus according to the invention disposed between the at least two successive operating units.

In accordance with another aspect, the production line comprises at least one thermal conditioning unit disposed downstream of the transfer apparatus.

In accordance with another aspect, the production line comprises at least one rolling unit disposed upstream of the transfer apparatus and able to form the products in a roll.

### DESCRIPTION OF THE DRAWINGS

These and other aspects, characteristics and advantages of the present invention will become apparent from the following description of some embodiments, given as a non-restrictive example with reference to the attached drawings wherein:
- fig. 1 is a schematic plan view of a transfer apparatus in accordance with a first embodiment of the present invention;
- fig. 2 is a schematic lateral view of fig. 1;
- fig. 3 is a schematic plan view of a transfer apparatus in accordance with a second embodiment of the present invention;
- fig. 4 is a schematic view of a production line for products comprising a transfer apparatus according to the invention;
- fig. 5 is a schematic view of successive steps of a method for producing products according to the present invention;
- fig. 6 shows a sequence of operating steps A-J of the transfer apparatus of fig. 3.

We must clarify that in the present description the phraseology and terminology used, as well as the figures in the attached drawings also as described, have the sole function of better illustrating and explaining the present invention, their function being to provide a non-limiting example of the invention itself, since the scope of protection is defined by the claims.

To facilitate comprehension, the same reference numbers have been used, where possible, to identify identical common elements in the drawings. It is understood that elements and characteristics of one embodiment can be conveniently combined or incorporated into other embodiments without further clarifications.

### DESCRIPTION OF SOME EMBODIMENTS OF THE PRESENT INVENTION

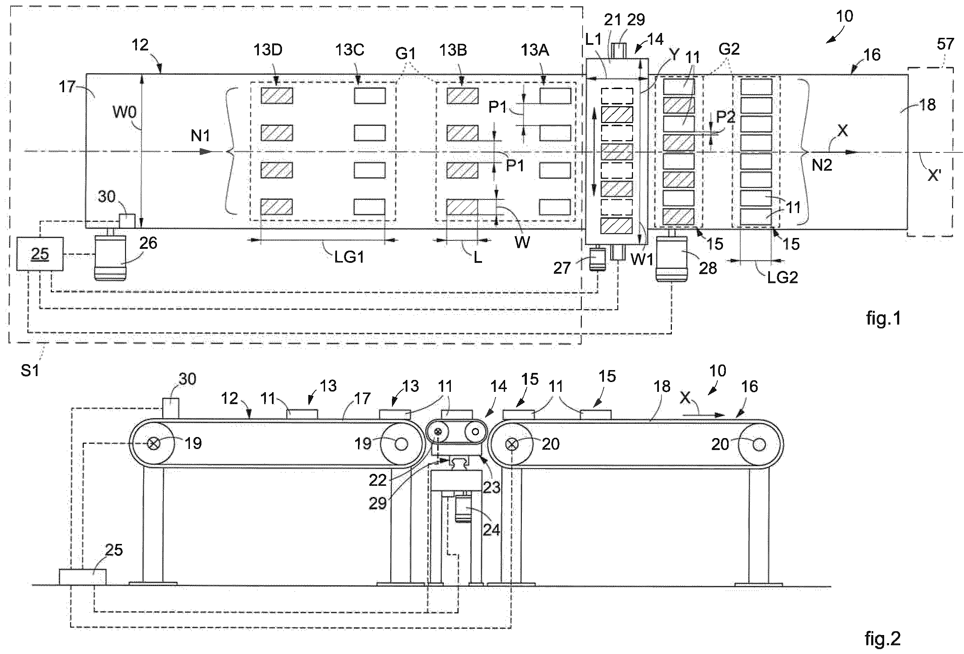

With reference to fig. 1, an apparatus 10 for transferring products according to the present invention comprises first advance means 12 configured to make the products 11 advance in a direction of advance X.

The products 11 are ordered by ranks 13, wherein each rank 13 comprises a determinate number N1 of products 11 distanced from each other by a first pitch P1.

Preferably, in the case of products 11 with an elongated shape, these are aligned with the respective axes of longitudinal development parallel to the direction of advance X, so that the head ends correspond to the short sides, although it is not excluded that they can be ordered with the longitudinal axis orthogonal to the direction of advance X.

The apparatus 10 also comprises a multiplier device 14 configured to receive at entry at least a first rank 13A and at least part of a second rank 13B of products 11 supplied by the first advance means 12, and to combine them together in order to obtain a combined rank 15.

Here and hereafter in the description, by the term "rank" 13 we mean an ordered group of products 11 which are aligned on a line or on a plane disposed transversely to the direction of advance X. By "combined" rank 15 we mean a rank that has a number of products 11 greater than the number of products of one rank 13.

The multiplier device 14 effectively has the function of reorganizing and compacting the products 11 that it receives at entry so that, downstream of the multiplier device 14, a number of N products 11 occupy a smaller space than the space occupied by N products 11 upstream of the multiplier device 14.

According to some embodiments, for example shown in fig. 1, upstream of the multiplier device 14 there is at least a first group G1 comprising a number N of products 11, which are disposed divided into a plurality of M1 ranks 13, 13A-13F, which occupies a first length LG1 in the direction of advance X.

Downstream of the multiplier device 14, on the other hand, there is at least a second group G2 comprising the same number N of products 11 as the first group G1, which comprises a number M2 of combined ranks 15 which is smaller than the number M1 of ranks 13, 13A-13F of the first group G1.

In the example in fig. 1, the first group G1 comprises in total M1 = 2 ranks 13 and N = 8 products 11, while the second group G2 comprises M2 = 1 combined rank 15 and N = 8 products 11. It is clear that, if we consider a first group comprising M1 = 4 ranks 13, the second group in the example case would comprise M2 = 2 combined ranks 15 for a total of N = 16 products 11.

In accordance with some embodiments, a rank 13, 13A-13B can comprise a first number N1 of products 11, while a combined rank 15 can comprise a second number N2 of products 11 which is greater than the first number N1.

Even if the first number N1 of products 11 of the ranks 13, 13-13F and respectively the second number N2 of products 11 of the combined ranks 15 in the example shown are constant, it can also be provided that this can vary, it being understood that the number N of products 11 of a first group G1 is the same as the number N of products 11 of a second group G2.

In the following description, particular reference will be made to the case in which the combined rank 15 is a multiple rank comprising a second number N2 of products 11 equal to an integer multiple of the first number N1.

However, according to other possible variants, not shown, the combined rank 15 could comprise a second number N2 of products 11 comprised between the first number N1 plus one and an integer multiple of the first number N1 minus one.

In the example case of fig. 1, the combined rank 15 is a multiple rank 15 comprising overall a second number N2 of products 11, equal to the sum of the number of products of the first 13A and of the second rank 13B.

In the multiple rank 15, the products 11 are distanced from each other by a second pitch P2, smaller than the first pitch P1.

In the multiple rank 15, the products of the first rank 13A alternate with the products of the second rank 13B.

According to some embodiments, the apparatus 10 comprises second advance means 16 disposed downstream of the multiplier device 14.

In accordance with possible solutions, the first 12 and/or the second advance means 16 can comprise conveyor belts, conveyors, or roller advance systems. In the following description, reference will be made to advance means 12, 16 comprising respective entry 17 and exit 18 conveyor belts, each wound on respective rollers 19, 20, at least one of which is motorized. The rollers 19, 20 are preferably disposed with the axes of rotation orthogonal to the direction of advance X.

According to some embodiments, the multiplier device 14 comprises at least a first conveyor belt 21 which is configured to advance in the direction of advance X.

The first conveyor belt 21 can be wound on respective rollers, at least one of which is connected to a drive member, which are preferably disposed with the axes of rotation orthogonal to the direction of advance X.

The first conveyor belt 21 can have a length L1 correlated to that of a respective product 11. For example, in the case of a product with a length L, the first conveyor belt can have a length L1 comprised between 1.3 and 1.6 times L.

The first conveyor belt 21 can have a width W1 greater than the width W0 of the first advance means 12, at least by an amount coherent with the sizes of the width W of a product 11 and of at least a second pitch P2.

The first conveyor belt 21 is mobile in a direction Y that is transverse to the direction of advance X, in particular a direction orthogonal to it, in one sense and the other.

By transverse direction Y we mean both a direction that is orthogonal with respect to the direction of advance X, and also a direction that is inclined with respect to it by an angle, for example, comprised between 0° and 45°.

According to some embodiments, the first conveyor belt 21 is installed on a structure 23, or mobile support frame, and it moves in the transverse direction Y together with it.

According to some embodiments, the structure 23 moves in a direction orthogonal to the direction of advance X.

In particular, the first conveyor belt 21, or the structure 23, can move in one sense or the other with respect to a reference axis X' of the first advance means 12, which is parallel to the direction of advance X, at least by a distance that is correlated to the width W of a product 11 and to a respective first pitch P1.

According to one possible embodiment, the mobile structure 23 can be associated with actuator devices 24 suitable to move it linearly in the transverse direction Y.

The structure 23 and/or the first conveyor belt 21 can be provided with guide means 29 to guarantee a correct alignment in the transverse direction Y.

The apparatus 10 comprises a control and command unit 25 connected to the advance means 12, 16 and to the multiplier device 14, and configured to command their operation according to a defined process, as will be better explained below.

In particular, the control and command unit 25 can command respective drive members 26, 27, 28 connected to the respective rollers 19 in order to regulate their speed of rotation and thus determine the speeds of the respective conveyor belts 17, 18, 21.

The control and command unit 25 can also command the actuator devices 24 to translate the first conveyor belt 21.

According to other embodiments, the apparatus 10 can comprise detection devices 30 associated at least with the first advance means 12 and configured to detect the overall length of each rank 13 and transmit the data to the control and command unit 25.

In particular, the detection devices 30 can comprise photocells suitable to detect the beginning and the end of each rank 13, and the control and command unit 25, on the basis of the data received, can calculate the instant in which the rank 13 will arrive in proximity to the first conveyor belt 21 in order to decelerate/accelerate it in a suitable manner.

On the basis of the data received, the control and command unit 25 can also be configured to determine whether the overall length of the rank 13 is comprised in an interval defined by respective minimum and maximum threshold values and, in the event that it does not fall within this interval, it can signal or activate removal means suitable to eliminate the rank 13 deemed unsuitable from the first advance means 12.

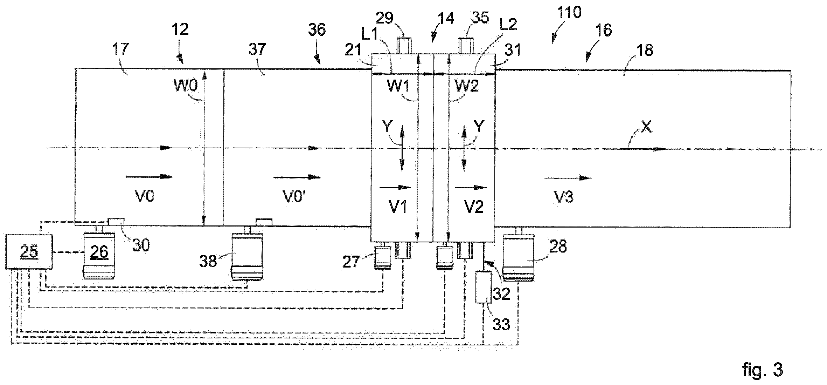

Fig. 3 shows a second embodiment of a transfer apparatus 110 according to the present invention. The components in common with the first embodiment of figs. 1 and 2 are indicated with the same reference numbers and will not be further described in detail.

In the apparatus 110 in accordance with the second embodiment, the multiplier device 14 comprises both a first 21 and also a second conveyor belt 31, disposed downstream of the first conveyor belt 21, which is configured to receive at entry a multiple rank 15.

The second conveyor belt 31 can have a length L2 that is correlated to that of a respective product 11, for example equal to the length L1 of the first conveyor belt 21, and a width W2 substantially equal to the width W1 of the first advance means 12.

The second conveyor belt 31 is also mobile both in the direction of advance X and also in the transverse direction Y.

According to some embodiments, the second conveyor belt 31 is also installed on a structure 32, or mobile support frame, and it moves in the transverse direction Y together with it.

According to some embodiments, the conveyor belt 31 is configured to advance in the direction of advance X and translate in a transverse direction Y that is orthogonal to the direction of advance X.

The second conveyor belt 31 is wound on respective rollers, at least one of which is connected to a drive member 34. The rollers are preferably disposed with the axes of rotation orthogonal to the direction of advance.

According to one possible embodiment, the mobile structure 32 is associated with actuator devices 33 suitable to move it linearly in the transverse direction Y. Guide means 35 can also be associated with the second conveyor belt 31.

In this case, the control and command unit 25 is also connected to the drive member 34 and to the actuator devices 33 in order to regulate the speed of advance and/or lateral translation of the second conveyor belt 31, in a manner coordinated with those of the first conveyor belt 21.

In particular, the control and command unit 25 is configured to stop the first conveyor belt 21 and/or the second conveyor belt 31 upon receiving a respective new first rank 13 or multiple rank 15, in order to align the heads of the products 11 disposed therein.

According to the embodiment of fig. 3, the apparatus 110 can also comprise a spacer device 36 disposed between the first advance means 12 and the multiplier device 14, and configured to distance the ranks 13 from each other by a desired reciprocal distance in the direction of advance X.

The spacer device 36 can comprise a conveyor belt 37 associated with a drive member 38, configured to advance at a speed V0' greater than the speed V0 of the first advance means 12.

The operation of the transfer apparatus 10, 110 described heretofore, which corresponds to the method according to the present invention, comprises the following steps:
- make the products 11 ordered by ranks 13, 13A, 13B advance in the direction of advance X, wherein each rank 13, 13A, 13B comprises a determinate first number N1 of products 11 distanced from each other by a first pitch P1;
- receive at entry into a multiplier device 14 at least a first rank 13A and at least a second rank 13B of products 11, and combine them together in order to obtain a multiple rank 15 comprising a number N2 of products 11 equal to the sum of the number of products of the first 13A and of the second rank 13B, distanced from each other by a second pitch P2, wherein the products 11 of the first rank 13A are alternated with the products 11 of the second rank 13B;
- make the multiple rank 15 advance in the direction of advance X.

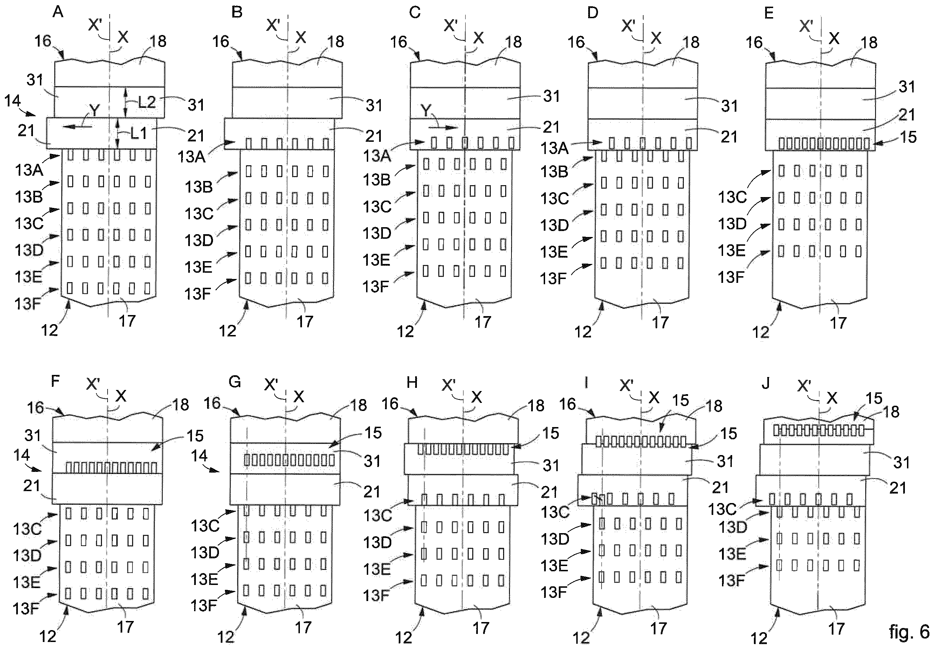

Fig. 6 shows a sequence of steps A-J of the method according to the invention implemented on the apparatus 110 comprising a multiplier device 14 provided with a first 21 and a second conveyor belt 31.

In step A, six ranks 13A-13B are shown on the advance means 12, the first conveyor belt 21 is empty and is displaced to the left with respect to a reference axis X', while the second conveyor belt 31 is aligned with the first advance means 12 and the second advance means 16.

The first advance means 12 advance with a substantially constant speed V0, equal or proportional to the speed of an operating station upstream.

The first conveyor belt 21 is decelerated and/or stopped to act as an abutment for the first rank 13A at entry, in order to align the heads of the respective products 11.

In step B, the first rank 13A is completely disposed on the first conveyor belt 21, while the remaining ranks 13B-13F continue to advance on the first advance means 12.

In step C, the first conveyor belt 21 is translated laterally to the right in the transverse direction Y by a distance that is correlated to the width W of a product 11, in such a way that the products 11 of the first rank 13A are positioned in correspondence with the empty spaces between the products 11 of the second rank 13B.

In step D, the first conveyor belt 21 is kept stationary so that the second rank 13B transported by the first advance means 12 moves to a position of abutment, aligning the heads of the respective products 11.

In step E, the second rank 13 is received by the first conveyor belt 21 and the respective products 11 are positioned alternated with the products 11 of the first rank 13A, forming a multiple rank 15.

The first conveyor belt 21 is then made to advance in the direction of advance X in order to feed the multiple rank 15 to the second conveyor belt 31 (step F), while the remaining ranks 13C-13F continue to advance on the first advance means 12.

In step G, while a third rank 13C of products is taken in abutment and aligned against the first stationary or slowed down conveyor belt 21, the multiple rank 15 is made to advance on the second conveyor belt 31 toward the second advance means 16.

In step H, the third rank 13C is received on the first conveyor belt 21. The second conveyor belt 31 is translated in a direction opposite to the previous translation of the first conveyor belt 21; in this specific case, the second conveyor belt 31 translates to the left until the multiple rank 15 is centered with respect to the reference axis X'.

It can also be provided that the second conveyor belt 31 is simultaneously mobile in the direction of advance X and in the transverse direction Y, so that the multiple rank 15 moves in a substantially diagonal trajectory.

In step I, the second conveyor belt 31 feeds the multiple rank 15 to the second advance means 16. The first conveyor belt 21 is again moved to the left in the transverse direction Y by a distance that is correlated to the width W of a product 11, so that the products 11 of the third rank 13C are positioned in correspondence with the empty spaces between the products 11 of the fourth rank 13D, returning substantially to the same position of step A.

In step J, the first conveyor belt 21 is kept stationary so as to act as an abutment for the heads of the products of the fourth rank 13D and to align them before the next step.

Subsequently, steps from E to J are substantially repeated to create a new multiple rank 15 and simultaneously move the previous multiple rank 15 toward the second advance means 16.

The speeds V1, V2 of the first conveyor belt 21 and of the second conveyor belt 31 respectively are, on each occasion, adjusted in each step by the control and command unit 25, on the basis of the speed V0 of the advance means 12, 36 upstream, of the position/speed of the ranks 13A-13F at entry, and of the speed V3 of the second advance means 16 downstream.

The transfer method can also provide to detect the beginning and the end of each rank 13, 13A-13F, process the data received in order to determine if the overall length of a given rank 13, 13A-13F is comprised in an interval defined by respective minimum and maximum threshold values, and signal the presence of an unsuitable rank 13 or activate removal means suitable to eliminate the rank 13 deemed unsuitable from the first advance means 12.

The transfer method can also provide to detect the beginning and the end of a combined rank 15, for example on the second conveyor belt 31 or on the second advance means 16, in order to adjust their speed and/or to determine whether the overall length of the combined rank 15 is comprised in an interval defined by respective minimum and maximum threshold values, and signal the possible presence of an unsuitable combined rank 15 or activate removal means to eliminate it.

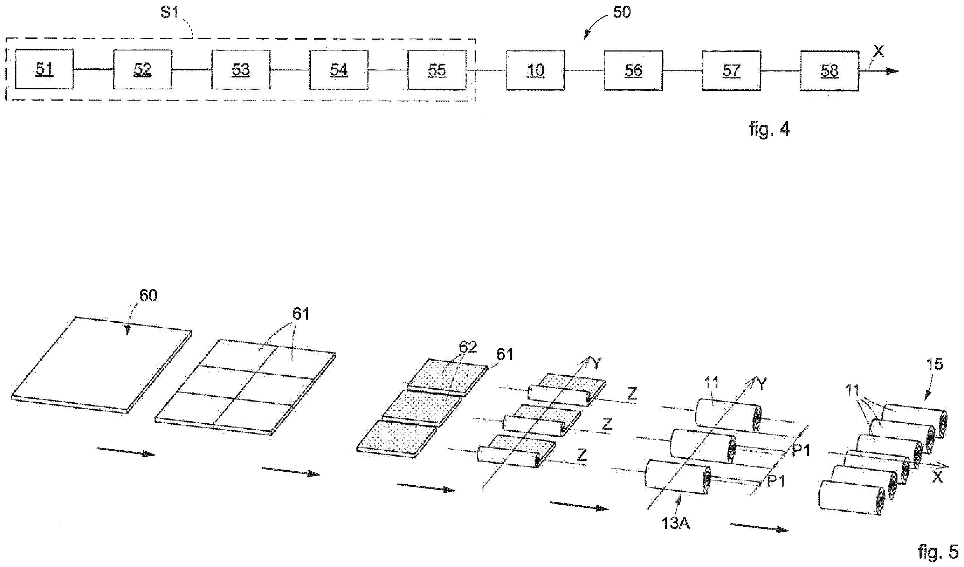

Fig. 4 concerns a production line 50 for producing products 11, in particular bakery products in the form of a roll, comprising a plurality of operating stations and at least one transfer apparatus 10, 110 according to the invention positioned between two successive operating stations.

According to some embodiments, the production line 50 can comprise an oven 51 for baking a sponge cake, one or more operating units for longitudinal cutting 52, filling 53, rolling 54, possible transverse cutting 55 and/or external filling 56, thermal conditioning, in particular cooling 57, and packaging 58.

In particular, a production line 50 according to the invention comprises at least two operating units 51-58 disposed in the direction of advance X and at least one apparatus 10, 110 for transferring products 11 disposed between them.

By thermal conditioning we generally mean a treatment of the products 11 aimed at modifying their temperature.

Although hereafter we will mainly refer to a thermal conditioning unit 57 suitable to cool the products 11 in order to bring them to a desired temperature, for example substantially equal to ambient temperature, or even a temperature lower than ambient temperature, it is not excluded that in other embodiments the thermal conditioning unit 57 may be a heating, drying or dehumidifying unit, of the type suitable to heat the products 11, for example to complete their cooking, to create a surface finish on them, dry them or remove excess moisture.

The thermal treatment unit 57 can comprise a tunnel, or other containing structure, and one or more of either ventilation means, heat exchangers, resistances or suchlike, based on the cooling and/or heating function it has to perform.

Although in fig. 4 the operating units 51-58 are shown disposed according to a given succession with respect to each other, it can be provided that only some of them are present in the production line 50, or that they have a different order. For example, the transverse cutting unit 55 could also be disposed upstream of the rolling unit 54, if present. Alternatively, instead of the rolling unit 54 there could be a dedicated spacing unit, or another operating unit at exit of which the products 11 are distanced by a first pitch P1 from each other.

In general, one or more of the operating units 51-56 disposed upstream of the thermal conditioning unit 57 can collectively define a section S1 for preparing the products 11.

The transfer apparatus 10, 110 can be disposed at any point whatsoever of the line downstream of the rolling, or spacing, operating unit 54, in order to exploit the free spaces that are formed between the products 11.

In the event that the transverse cutting unit 55 is present, the transfer apparatus 10, 110 can be disposed downstream thereof.

Preferably, the transfer apparatus 10, 110 is disposed upstream of the thermal conditioning operating unit 57. In this way, it is possible to halve the speed of the products in the thermal conditioning operating unit 57 up to approximately half the speed of the products in the operating units upstream, doubling the residence time in it, considerably increasing the effectiveness of the cooling without losing productivity.

By way of example, the products 11 in the thermal treatment unit 57 can be made to advance at a speed corresponding to the speed V3 of the second advance means 16 and equal to approximately half the speed V0, V0' of the first advance means 12 upstream of the multiplier device 14.

The present invention also concerns a method for producing products 11, in this specific case food products 11, comprising:
- a step of preparing the food products 11 carried out in a preparation section S1;
- a step of thermal conditioning of the food products 11 carried out in a thermal conditioning unit 57,

wherein, in the preparation step, a first group G1 of products 11, which are disposed divided into a plurality of consecutive M1 ranks 13, 13A-13F, is made to advance in a direction of advance X which occupies, in the preparation section S1, a first length LG1 in a direction of advance X, and
wherein, between the preparation step and the thermal conditioning step, the food products 11 of the first group G1 are reorganized by combining at least one of the ranks 13, 13A-13F with at least part of another one of the ranks 13, 13A-13F, defining a second group G2 of food products 11 that advances toward the thermal conditioning unit 57 and has the same number N of products 11 of the first group G1 but a second number M2 of combined ranks 15 smaller than the first number M1 of ranks 13, 13A-13F of the first group G1, in such a way that, in the thermal conditioning unit 57, the second group G2 occupies a second length LG2 in the direction of advance X that is shorter than the first length LG2.

Advantageously, therefore, upstream of the thermal conditioning step, a compaction is carried out, that is, a multiplication of the ranks of the products whereby the thermal conditioning step is carried out on the products 11 already ordered into combined ranks 15, allowing to obtain the conditioning effect, for example desired cooling, while maintaining high productivity without having to substantially lengthen or modify the sizes of the thermal conditioning unit 57 compared to traditional ones.

In accordance with one aspect of the production method according to the invention, at least one combined rank 15 is a multiple rank comprising a second number N2 of products 11 equal to an integer multiple of a first number N1 of products 11 in a rank 13, 13A-13F. For example, a combined rank 15 can comprise a second number N2 equal to two, three, four times, or more, the first number N1.

According to possible embodiments, in a combined rank 15 the products 11 of a first rank 13A are alternated with the products of a second rank 13B.

According to a possible variant, in a combined rank the products 11 of a first rank 13A are all disposed on the same side and are placed side by side with the products of a second rank 13B.

This can be achieved for example by compacting the products of a first rank 13A on one side of the entry conveyor belt 17, or on a conveyor belt 21 downstream thereof, reducing the pitch between them, and compacting the products of a second rank 13B on the opposite side of such belt 17, 21.

In accordance with another variant, it can also be provided that only a part of the products 11 of the second rank 13B is positioned respectively alternating, or side by side, with the products of the first rank 13A.

According to other variants, not shown, the reorganization of the products 11 can provide that the products 11 of a first rank 13A are disposed vertically offset with respect to the products of a second rank 13B. This can be achieved, for example, by loading a first rank 13A on a first conveyor belt and a second rank on a second conveyor belt disposed above the first conveyor belt.

According to other embodiments, in the thermal treatment step the products 11 are made to advance at a speed of advance V3 equal to approximately half of a speed of advance V0 of the products 11 in a step upstream, in particular in a step upstream of the multiplier device 14.

This advantageously allows to be able to extend the residence time of the products 11 inside the thermal treatment unit 57, achieving the desired conditioning thereof, without needing to modify the length of the traditional type of thermal treatment units 57, or possibly allowing to reduce their length and therefore optimize the necessary spaces and overall dimensions.

In accordance with one aspect of the present invention, the step of making the products 11 available comprises:
- a step of preparing a base product 60;
- a step of cutting the base product 60 so as to obtain a plurality of portions 61 adjacent to each other;
- a step of spacing the portions 61 in a transverse direction Y.

According to some embodiments, the step of preparing a base product 60 can for example comprise the preparation of a sponge cake baked in the oven 51, or even a cake of a different type of pastry, such as shortcrust pastry, puff pastry or suchlike.

In accordance with one aspect of the production method according to the invention, the portions 61 are flat and the spacing step comprises a rolling of the portions 61 around respective longitudinal axes Z which are parallel to the direction of advance X.

According to possible variants, the spacing step can be carried out in a different way, for example by means of conveyor belts diverging from each other, or suchlike.

In any case, at the end of this spacing step, the products 11 will be distanced from each other by a first pitch P1 with respect to the adjacent products 11 of the same rank 13, 13A-13F.

In accordance with another aspect, the production method comprises a step of filling the products 11 that provides to apply a layer of filling 62 to the portions 61. This step can be carried out before the rolling step, if present, so that the filling 62 remains enclosed within the roll.

In accordance with another aspect, the production method comprises a step of cutting in a longitudinal direction, parallel to the direction of advance, and a step of cutting in a transverse direction, in particular a direction that is orthogonal to the direction of advance X, so as to obtain a plurality of portions 61 preferably disposed in the shape of a chessboard or matrix, aligned by rows and columns parallel to each other.

In accordance with another aspect, the production method comprises a step of external filling of the products 11 that is preferably carried out between the spacing step and the thermal conditioning step.

It is clear that modifications and/or additions of parts or steps may be made to the transfer apparatus 10, 110, to the production line 50 and to the methods for producing and transferring products 11 as described heretofore, without departing from the field and scope of the present invention as defined by the claims.

It is also clear that, although the present invention has been described with reference to some specific examples, a person of skill in the art shall certainly be able to achieve many other equivalent forms of transfer apparatus 10, 110, production line 50 and transfer and production methods, having the characteristics as set forth in the claims and hence all coming within the field of protection defined thereby.

In the following claims, the sole purpose of the references in brackets is to facilitate reading and they must not be considered as restrictive factors with regard to the field of protection defined by the claims.

## Claims

1. Method for producing food products (11), comprising:
- a step of preparing food products (11) carried out in a preparation section (S1);
- a step of thermal conditioning of said food products (11) carried out in a thermal conditioning unit (57),
**characterized in that**
in said preparation step a first group (G1) of said food products (11), disposed divided into a plurality of (M1) consecutive ranks (13, 13A-13F), is made to advance in a direction of advance (X) which occupies, in said preparation section (S1), a first length (LG1) in a direction of advance (X),
**and in that** between said preparation step and said thermal conditioning step said food products (11) of said first group (G1) are reorganized by combining at least one of said ranks (13, 13A-13F) with at least part of another of said ranks (13, 13A-13F), defining a second group (G2) of food products (11) that advances toward said thermal conditioning unit (57) which has the same number (N) of products (11) as said first group (G1) but a number (M2) of combined ranks (15) of products (11) lower than the number (M1) of ranks (13, 13A-13F) of said first group (G1), so that, in said thermal conditioning unit (57), said second group (G2) occupies a second length (LG2) in said direction of advance (X), shorter than said first length (LG2).

2. Production method as in claim 1, wherein at least one combined rank (15) is a multiple rank comprising a second number (N2) of products (11) equal to an integer multiple of a first number (N1) of products (11) in a rank (13, 13A-13F).

3. Production method as in claim 1, **characterized in that** at least one combined rank (15) comprises a second number (N2) of products comprised between a first number (N1) of products (11) of a rank (13, 13A-13B) plus one, and an integer multiple of the first number (N1) of products of a rank (13, 13A-13B) minus one.

4. Production method as in one or the other of the previous claims, **characterized in that** in a combined rank (15) the products (11) of a first rank (13A) are alternated with the products of a second rank (13B).

5. Production method as in one or the other of claims from 1 to 4, **characterized in that** in a combined rank (15) the products (11) of a first rank (13A) are all disposed on the same side and they are placed side by side with the products of a second rank (13B), or the products (11) of a first rank (13A) are disposed staggered vertically with respect to the products of a second rank (13B).

6. Production method as in one or the other of the previous, **characterized in that** in said thermal conditioning step said products (11) are made to advance at a speed of advance (V3) equal to approximately half of a speed of advance (V0) of said products (11) in said preparation step.

7. Production method as in one or the other of the previous claims, **characterized in that** said preparation step comprises:
- a step of preparing a base product (60);
- a step of cutting said base product (60) so as to obtain portions (61) adjacent to each other;
- a step of distancing said portions (61) in a direction (Y) orthogonal to a direction of advance (X) so as to obtain a plurality of products (11) ordered by ranks (13, 13A-13F), wherein the products (11) of each rank (13A, 13B) are distanced from each other by a first pitch (P1).

8. Production method as in claim 7, **characterized in that** said portions (61) are flat and said distancing step comprises a rolling of said portions (61) around respective longitudinal axes (Z) which are parallel to said direction of advance (X).

9. Production method as in one or the other of claims 7 or 8, **characterized in that** it comprises a step of cutting in a longitudinal direction, parallel to said direction of advance (X), and a step of cutting in a direction that is orthogonal to said direction of advance (X) in order to obtain flat portions (61) aligned in the shape of a chessboard or matrix, aligned in ranks and columns parallel to each other.

10. Production method as in one or the other of the previous claims, **characterized in that** in said thermal conditioning step said products (11) ordered in combined ranks (15) are subjected to cooling in order to decrease their temperature.

11. Method for transferring products (11), which provides to:
- make said products (11), ordered by ranks (13, 13A-13F) and distanced from each other by a first pitch (P1), advance in a direction of advance (X);
- receive at entry in a multiplier device (14) at least a first rank (13A) and at least a second rank (13B), combining them together obtaining a single multiple rank (15) comprising a number of products (11) equal to the sum of the products of the at least a first rank (13A) and of the at least a second rank (13B), which are alternating with each other and distanced from each other by a second pitch (P2).
- make said multiple rank (15) advance in said direction of advance (X).

12. Transfer method as in claim 11, **characterized in that** it provides to receive said first rank (13A) on a first conveyor belt (21) of said multiplier device (14) and subsequently translate said first conveyor belt (21) in a direction (Y) that is orthogonal to said direction of advance (X) in one sense or the other with respect to a reference axis (X') of said first advance means (12) which is parallel to said direction of advance (X) so that the products (11) of said second rank (13B) are positioned in correspondence with the empty spaces between the products (11) of said first rank (13A) and they are translated there.

13. Transfer method as in one or the other of claims 11 or 12, **characterized in that** it provides to slow down and/or keep stationary said first conveyor belt (21) in said direction of advance (X) with respect to said first advance means (12) to align the heads of said products (11) and compact the rank (13, 13A-13F) at entry.

14. Transfer method as in one or the other of claims from 11 to 13, **characterized in that** it provides to transfer said multiple rank (15) onto a second conveyor belt (31) and subsequently translate said second conveyor belt (31) in said orthogonal direction (Y) in order to align and center it with respect to said reference axis (X').

15. Transfer method as in one or the other of claims from 9 to 14, **characterized in that** it provides to detect the position and/or length of said ranks (13, 13A-13F) on said first advance means (12) by means of detection devices (30) and to command the operation of said first (21) and/or said second conveyor belt (31) both in terms of speed in said direction of advance (X), and also in terms of position and speed in said orthogonal direction (Y) also as a function of the data received from said detection devices (30).
